# EUROPÄISCHE PATENTSCHRIFT

(11) **EP 1 989 440 B1**
(45) Veröffentlichungstag und Bekanntmachung des Hinweises auf die Patenterteilung: **15.08.2012**
(21) Anmeldenummer: 07711656.4
(22) Anmeldetag: 23.02.2007
(51) Int. Cl.: F03D 7/04, H02H 3/18, H02M 1/32

(54) **ENERGIEVERSORGUNG FÜR DIE BLATTVERSTELLEINRICHTUNG EINER WINDENERGIEANLAGE**
ENERGY SUPPLY FOR A BLADE ADJUSTMENT DEVICE PERTAINING TO A WIND ENERGY INSTALLATION
ALIMENTATION EN ÉNERGIE POUR UN DISPOSITIF DE RÉGLAGE DE PALE D'UNE ÉOLIENNE

(30) Priorität: 24.02.2006 DE 102006009127
(43) Veröffentlichungstag der Anmeldung: 12.11.2008
(73) Patentinhaber: REpower Systems SE, 22297 Hamburg (DE)
(72) Erfinder: WARFEN, Karsten, 23795 Söhren (DE); LETAS, Heinz-Hermann, 23701 Süsel (DE)
(74) Vertreter: Glawe, Delfs, Moll
(86) Internationale Anmeldenummer: PCT/EP2007/001594
(87) Internationale Veröffentlichungsnummer: WO 2007/098894

(56) Entgegenhaltungen:
- DE-A1- 10 335 575
- DE-B3-102004 005 169
- FR-A1- 2 790 882

## Beschreibung

Die Erfindung betrifft eine Energieversorgung für Blattverstelleinrichtungen einer Windenergieanlage im Allgemeinen, und im Besonderen eine Windenergieanlage mit einem Rotor mit verstellbaren Rotorblättern, wobei für die Verstellung der Rotorblätter ein an einen Pitchkreis und einen Notkreis angeschlossener Stellmotor vorgesehen ist.

Windenergieanlagen mit pitchverstellbaren Rotorblättern haben aus Gründen der Betriebssicherheit in der Regel eine Notantriebseinrichtung mit einem autarken Energiespeicher, wie beispielsweise einem Akkumulator. Diese Notantriebseinrichtung mit ihrem eigenen Energiespeicher dient als Reserve für Störfälle, und zwar insbesondere wenn das Hauptsystem für den Pitchverstellantrieb auf Grund eines Defekts oder auf Grund eines Ausfalls der Energieversorgung nicht mehr arbeitet. Um auch unter solchen Umständen die Windenergieanlage sicher stillsetzen zu können, ist die Notantriebseinrichtung vorgesehen. Aus DE-B-103 35 575 bzw. DE-B3-10 2004 005 169 ist ein Pitchverstellantrieb mit einer Notantriebseinrichtung bekannt. Der Pitchverstellantrieb umfasst einen netzgespeisten Umrichter, der einen Drehstrommotor antreibt, welcher den Anstellwinkel des oder der zugeordneten Rotorblätter verstellt. Weiter ist als Notantriebseinrichtung ein Akkumulator als unabhängige Energiequelle vorgesehen. Er ist mit dem Umrichter verbunden, so dass im Fehlerfall mittels eines Schalters der Akkumulator mit dem zwischenkreis des Umrichters verbunden wird und damit die für die Betätigung des Motors erforderliche Energie bereitstellt. Es hat sich aber gezeigt, dass im Betrieb der Notantriebseinrichtung gewisse Lastzustände auftreten können, bei denen das zu verstellende Rotorblatt den Motor antreibt. Es entsteht dann ein Schiebezustand. Dieser führt zur Erzeugung elektrischer Energie in dem Motor, wodurch es zur Rückspeisung von Leistung in den Akkumulator kommen kann. Da hierbei große Stromstärken auftreten können, entsteht das Risiko einer Hochstromladung für den Akkumulator. Außerdem bilden sich dadurch kurzzeitige Ladezyklen, die die Lebensdauer des Akkumulators verkürzen. Der Verschleiß des Akkumulators erhöht sich dadurch, es besteht sogar die Gefahr eines vorzeitigen Ausfalls.

Der Erfindung liegt die Aufgabe zu Grunde, eine Energieversorgung für eine Blattverstellung bereitzustellen, welche die vorgenannten Nachteile vermindert.

Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage mit einem Rotor mit Rotorblättern, deren Anstellwinkel mittels einer Pitchverstelleinrichtung änderbar ist, wobei für die Verstellung der Rotorblätter ein an einen Pitchkreis und einen Notkreis angeschlossener Stellmotor vorgesehen ist, wobei in einer Normalbetriebsart die Rotorblätter mittels des Pitchkreises und in einem Notbetrieb mittels des Notkreises betätigt sind, und der Notantrieb einen elektrischen Energiespeicher, eine Schalteinrichtung Verbindungsleitungen zu dem Stellmotor und eine Schutzeinrichtung aufweist, ist gemäß der Erfindung vorgesehen, dass die Schutzeinrichtung ein Leistungsflussdetektormodul, das dazu ausgebildet ist zu bestimmen, ob elektrische Leistung in den oder von dem Stellmotor fließt, und weiter ein Entlademodul umfasst, das dazu ausgebildet ist, bei einem Leistungsfluss von dem Stellmotor eine Spannung und/oder Strom in dem Notkreis zu begrenzen.

Durch aerodynamische Kräfte kann es vor allem bei einer schnellen Verstellung der Rotorblätter in Fahnenstellung zu einem Schiebezustand im Pitchverstellantrieb kommen. Damit ist gemeint, dass das Rotorblatt den Pitchverstellantrieb antreibt. Der Stellmotor wirkt dann als Generator. In dem Notkreis kehrt sich die Richtung des Leistungsflusses dadurch um. Wird der Stellmotor als Generator tätig, so fließt entsprechend elektrische Leistung aus ihm heraus. Mit der Erfindung wird erreicht, dass bei einem solchen generatorischen Betrieb des Stellmotors erzeugte elektrische Leistung nicht in den elektrischen Energiespeicher des Notantriebs fließt. Dieser Zustand des Erzeugens elektrischer Leistung durch den Generator wird mittels des erfindungsgemäßen Leistungsflussdetektormoduls erkannt, und dann mittels des weiter gemäß der Erfindung vorgesehenen Entlademoduls elektrische Leistung aus dem Notkreis abgeführt. Dies kann in der Weise geschehen, dass die Spannung in dem Notkreis verringert wird oder entsprechend der Strom. Der Gefahr von Schädigungen des elektrischen Energiespeichers durch Hochstromladung auf Grund der im generatorischen Betrieb erzeugten Leistung wird damit entgegengewirkt. Weiter wird ein eventueller Spannungsanstieg im Notkreis begrenzt, so dass keine schädlichen Werte erreicht werden können. Die für die Lebensdauer und Kapazität des elektrischen Energiespeichers negativen Faktoren wie Überspannung und kurze Ladezyklen, die durch die rückfließende Leistung im generatorischen Betrieb bei Anlagen des Stands der Technik hervorgerufen werden, können dank der Erfindung vermieden werden. Einer vorzeitigen Alterung oder gar Ausfall des elektrischen Energiespeichers wird damit entgegengewirkt.

Außer der Schonung des elektrischen Energiespeichers erreicht die Erfindung auch eine Verbesserung des Betriebsverhaltens. Es hat sich gezeigt, dass bei herkömmlichen Anlagen die Stabilität der Systemkennlinie bei Auftreten von Schiebezuständen und dadurch bedingtem generatorischen Betrieb beeinträchtigt werden kann. Dank der erfindungsgemäßen Erkennung eines solchen Zustands durch Bestimmung des Leistungsflusses wird die so erzeugte Leistung über das Entlademodul abgeführt statt in den elektrischen Energiespeicher geleitet zu werden, wodurch eine Verbesserung der Systemkennlinie erreicht wird.

Ein weiterer Vorzug der Erfindung besteht darin, dass die genannten Vorteile bezüglich der Schonung des elektrischen Energiespeichers und der Verbesserung der Systemkennlinie mit einem geringen Hardwareaufwand erreicht werden können.

Eine einfache Möglichkeit der Bestimmung des Leistungsflusses besteht darin, dass die Schutzeinrichtung die Spannung im Notkreis bestimmt und ihren Anstieg im Notbetrieb begrenzt hierbei macht sich die Erfindung den an sich einfachen Zusammenhang zu Nutze, dass sich bei einem generatorischen Betrieb des Stellmotors seine Klemmenspannung erhöht, und damit die Spannung im gesamten Notkreis ansteigt. Anders als im Normalbetrieb, worin die Spannung im Notkreis höchstens so hoch wie die Nennspannung des elektrischen Energiespeichers des Notkreises ist, kommt es im Fall des Notbetriebs und Leistungsfluss aus dem Stellmotor heraus zu einer Erhöhung der Spannung über die Nennspannung des elektrischen Energiespeichers hinaus. Eine solche Spannungsänderung kann mittels des Leistungsflussdetektormoduls erkannt und damit die Leistungsflussrichtung bestimmt werden. Es wirkt mit dem Entlademodul derart zusammen, dass im Fall eines Leistungsflusses aus dem Stellmotor die Spannung im Notkreis begrenzt wird, und zwar vorzugsweise auf einen für den elektrischen Energiespeicher verträglichen Wert. Die durch den Spannungsanstieg ansonsten entstehende schädliche Hochstromladung des Energiespeichers kann auf diese Weise sicher verhindert werden. Zweckmäßigerweise ist die Schutzeinrichtung derart eingerichtet, dass im Notbetrieb die Spannung im Notkreis auf einen Wert etwas oberhalb der Nennspannung des elektrischen Energiespeichers begrenzt ist, und zwar vorzugsweise etwa 5 bis 20 % über der Nennspannung.

Es ist aber nicht unbedingt zwingend, dass die Leistungsbegrenzung durch das Entlademodul allein über die Spannung erfolgt. Alternativ oder zusätzlich kann vorgesehen sein, den Stromfluss im Notkreis zu begrenzen. Dies ist insbesondere bei einem niederohmigen elektrischen Energiespeicher von Vorteil, bei dem eine Hochstromladung bereits bei geringfügigen oder kaum messbaren Spannungsänderungen auftreten kann. Je nach der verwendeten Technologie für den elektrischen Energiespeicher kann es auch zweckmäßig sein, für das Leistungsflussdetektormodul eine Kombination aus den Parametern Spannung und Strom heranzuziehen, insbesondere als ein vorzeichenbehaftetes Produkt aus Spannung und Leistung.

Zur Abführung der überschüssigen, von dem Stellmotor im Schiebebetrieb erzeugten elektrischen Leistung weist das Entlademodul zweckmäßigerweise einen Bremschopper mit einem Bremswiderstand auf. Unter einem Bremschopper wird eine Kombination aus einem getakteten Schalter (Chopper) mit einem ohmschen Widerstand als Energiewandler (von elektrischer in thermischer Energie) verstanden. Durch Veränderung des Tastverhältnisses bei der Ansteuerung des getakteten Schalters kann bestimmt werden, wie viel elektrische Leistung über das Entlademodul in thermische Energie umgewandelt und damit dem Notkreis entzogen wird. Ein solcher Bremschopper ermöglicht damit bei geringem Hardwareaufwand eine feinfühlige Veränderung des Leistungsflusses in dem Notkreis.

Vorzugsweise ist der Bremschopper als ein Bremschopper eines Umrichters ausgeführt und im Notbetrieb über ein Schaltelement mit dem Notkreis verbunden. Die Erfindung macht sich hierbei zu Nutze, dass typischerweise Umrichter ohnehin einen Bremschopper aufweisen, um gegebenenfalls überschüssige Energie abbauen zu können. Indem dieser meist ohnehin vorhandene Bremschopper als Bremswiderstand für den Notkreis verwendet wird, ist insoweit für die Realisierung der Erfindung kaum zusätzliche Hardware erforderlich. Häufig ist der im Pitchkreis vorgesehene Umrichter von einer solchen Bauart, dass er einen Zwischenkreis aufweist. In einem solchen Fall kann der Bremschopper mit Vorteil an dem Zwischenkreis angeschlossen sein. Es kann aber auch vorgesehen sein, dass der Bremschopper an einem Wechselrichter oder einer H-Brückenschaltung angeschlossen ist. Auch wenn die Anordnung des Bremschoppers an dem Umrichter die häufigste Ausführungsform darstellt, so kann die Erfindung auch bei solchen Bauarten Verwendung finden, bei denen der Bremschopper an dem Wechselrichter des Umrichters bzw. einer diesem nachgeordneten H-Brückenschaltung zur Ansteuerung eines Gleichstrommotors angeschlossen ist.

Gemäß einem besonders bevorzugten Aspekt der Erfindung weist das Entlademodul ein Sollwertänderungsmodul für den Zwischenkreis auf. Dieses ist dazu ausgebildet, einen Sollwert für den Energiezustand des Zwischenkreises zu ändern, und zwar in dem Fall des Notbetriebs mit Betätigung des Stellmotors über den Notkreis. Im Fall eines Gleichspannungszwischenkreises ist der Sollwert eine Spannung, und das Schwellwertänderungsmodul ist dazu ausgebildet, im Notbetrieb einen geringern Spannungswert als Sollwert vorzugeben. Es ist zweckmäßig, die Sollspannung des Zwischenkreises dann auf eine Spannung etwa in Höhe der Nennspannung des elektrischen Energiespeichers zu senken. Bevorzugt ist ein Schwellwert von etwa 5 bis 20 % über der Nennspannung des elektrischen Energiespeichers. Damit wird ein schnelles Ansprechendes Bremswiderstandes erreicht, und zwar insbesondere in den Fällen, in denen der ohnehin vorhandene Chopper des Umrichters als Bremswiderstand fungiert. (Entsprechendes gilt für Ströme bei einem Gleichstromzwischenkreis.)

Zweckmäßigerweise weist das Entlademodul eine Netztrenneinrichtung auf, die dazu ausgebildet ist, den Umrichter von seinem Versorgungsnetz zu trennen. Dazu kann ein gesondertes oder ein ohnehin vorhandenes Trennschütz vorgesehen sein. Ein gesondertes Schütz erhöht zwar den erforderlichen Aufwand, bietet aber den Vorteil einer höheren Redundanz und damit einer höheren Ausfallsicherheit.

Weiter kann vorgesehen sein, statt eines gemeinsamen Stellmotors für den Pitchkreis und den Notkreis jeweils einen eigenen Motor vorzusehen. Zwar bedingt dies einen höheren Bauteileaufwand, dafür vergrößert sich aber die Redundanz des gesamten Pitchverstellsystems. Dies ist insbesondere dann zweckmäßig, wenn für die Rotorblätter des Rotors nur ein gemeinsames Pitchverstellsystem vorgesehen ist. Mit einem gesonderten Motor für den Notkreis ist dann auch bei einem Defekt des im Normalbetrieb verwendeten Motors des Pitchkreises noch sichergestellt, dass die Rotorblätter in die Fahnenstellung verstellt werden können. In ungünstigen Fällen kann es vorkommen, dass der Motor des Pitchkreises aufgrund eines Defekts blockiert. Um auch in diesem Fall noch eine Verstellung mittels des Motors des Notkreises zu ermöglichen, ist zweckmäßigerweise der Motor des Pitchkreises über eine trennbare Kupplung und/oder eine Scherverbindung mit dem Rotorblatt gekoppelt. Die Kupplung kann steuerbar sein, beispielsweise als Magnetkupplung ausgeführt sein, und so bei Defekt des Motors des Pitchkreises geöffnet werden; es kann sich aber auch um eine Rutschkupplung handeln.

Zweckmäßigerweise ist der Motor des Pitchkreises ein Drehstrommotor und der des Notkreises ein Gleichstrommotor. Letzterer hat den Vorteil der einfachen Versorgung mit Gleichstrom aus einem elektrischen Energiespeicher, wie einem Akkumulator. Der Drehstrommotor für den Pitchkreis bietet den Vorteil des höheren Drehmoments, einfacheren Aufbaus und guter Regelbarkeit über den Umrichter.

Die Erfindung bezieht sich weiter auf ein Verfahren zum Verstellen der Rotorblätter eines Rotors für Windenergieanlagen mittels eines Stellmotors einer Pitchverstelleinrichtung, wobei im Normalbetrieb das Verstellen der Rotorblätter über einen Pitchkreis und in einem Notbetrieb über einen Notkreis erfolgt, wobei die Erfindung weiter vorsieht ein Bestimmen eines Leistungsflusses im Notkreis und Begrenzen einer von dem Stellmotor im Notbetrieb fließenden elektrischen Leistung durch Verringern der Spannung und/oder des Stroms in dem Notkreis. Zur Erläuterung des Verfahrens wird auf oben stehende Beschreibung verwiesen.

Die Erfindung wird nachfolgend unter Bezugnahme auf die beigefügte Zeichnung erläutert, in der vorteilhafte Ausführungsbeispiele dargestellt sind. Es zeigen:

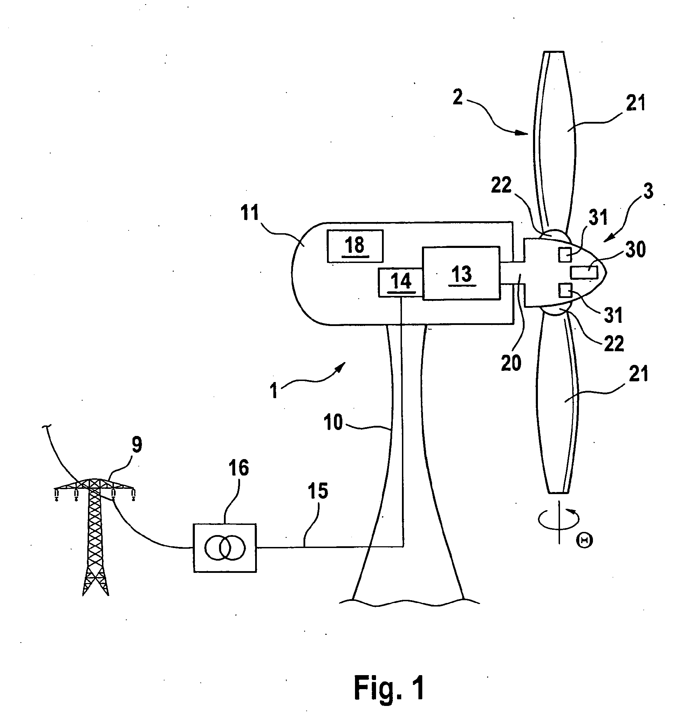

- Fig. 1: eine schematische Ansicht einer erfindungsgemäßen Windenergieanlage;
- Fig. 2: eine schematische Ansicht einer Pitchverstellung gemäß der Erfindung mit einem Pitchkreis und einem Notkreis;
- Fig. 3: eine schematische Ansicht einer alternativen Ausführungsform zu Fig. 2; und
- Fig. 4: eine schematische Ansicht einer weiteren alternativen Ausführungsform.

Eine in ihrer Gesamtheit mit der Bezugsziffer 1 bezeichnete Windanlage umfasst einen Turm 10 mit einer Gondel 11, die in einer Azemutebene drehbeweglich an dessen oberen Ende angeordnet ist. An einer Stirnseite der Gondel 11 ist ein Rotor 2 drehbar über eine Rotorwelle 20 angeordnet. Der Rotor 2 umfasst mehrere (im dargestellten Beispiel zwei) Rotorblätter 21. Eine Rotorblattnabe 22 verbindet die Propellerblätter 21 mit der Rotorwelle 20. Die Rotorwelle 20 treibt einen in der Gondel 11 angeordneten Generator 13 zur Erzeugung elektrischer Energie an. Die elektrische Energie wird zu einem Umrichter 14 geführt und über eine Drehstromleitung (dargestellt ist nur eine Phase) 15 und einen Transformator 16 an ein elektrisches Netz 9 abgegeben. In der Gondel 11 ist weiter noch eine Steuerungseinrichtung 18 für die Windenergieanlage 1 angeordnet. Sie dient in an sich bekannter Weise zur Betriebsführung der Windenergieanlage.

Die Rotorblätter 21 sind bezüglich ihres Anstellwinkels Θ verstellbar an der Nabe 22 angeordnet. Dazu ist eine Pitchverstelleinrichtung 3 vorgesehen. Sie umfasst eine Pitchsteuerung 30 und jeweils eine den einzelnen Rotorblättern 21 zugeordnete Antriebseinheit 31.

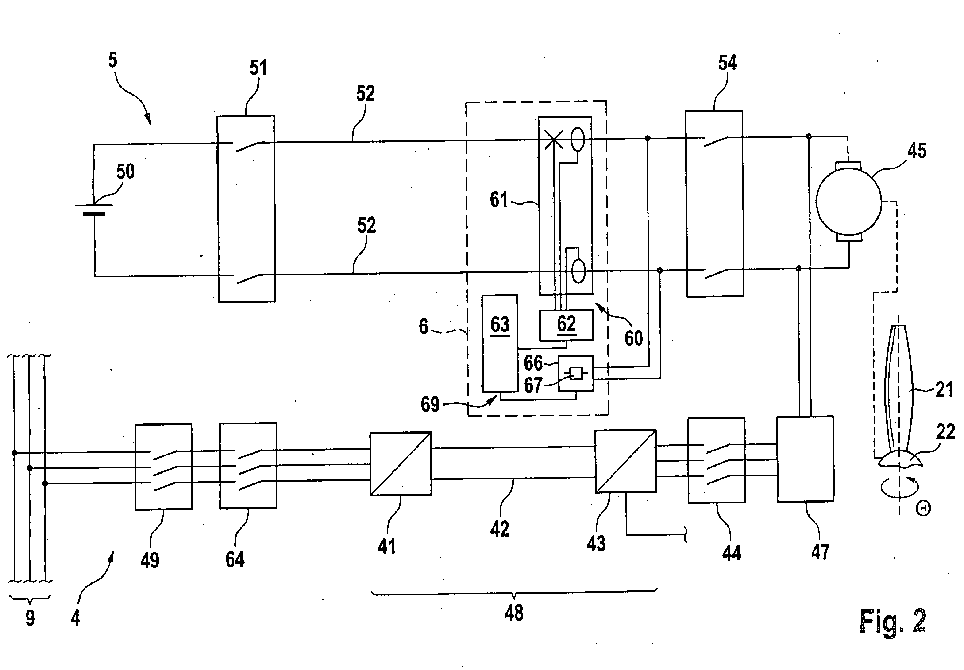

Aufbau und Funktionsweise der Antriebseinheit 31 werden nun in Bezug auf Fig. 2 erläutert. Sie umfasst einen Pitchkreis 4 und einen Notkreis 5 zur Betätigung eines Stellmotors 45. Der Pitchkreis 4 dient zur Verstellung des Anstellwinkels Θ der Rotorblätter 21 im Normalbetrieb. Der Notkreis 5 dient dazu, eine Verstellung der Rotorblätter 21 in eine sichere Position (Fahnenstellung) auch dann zu gewährleisten, wenn der Pitchkreis 4 selbst oder seine Energieversorgung (nämlich von dem elektrischen Netz 9) ausgefallen sind.

Der Pitchkreis 4 umfasst ein an das elektrische Netz 9 angeschlossenes Schütz 49 zur Energieversorgung und einen Umrichter 48, der einen netzseitigen Gleichrichter 41, einen Zwischenkreis 42 und einen Wechselrichter 43 aufweist. Der Wechselrichter 43 erzeugt ein dreiphasiges Ausgangssignal, das an den Stellmotor 45 angelegt ist. Dazu ist der als ein Gleichstrommotor ausgeführte Stellmotor 45 über ein Motorschütz 44 und eine H-Brückenschaltung 47 mit dem Wechselrichter 43 verbunden. Die H-Brückenschaltung 47 erlaubt es auf an sich bekannte Weise, einen Gleichstrommotor an dem Ausgang eines Wechselrichters regelbar zu betreiben.

Der Notkreis 5 dient dazu, auch bei Ausfall des Pitchkreises 4 selbst oder seiner Energieversorgung (dargestellt durch das elektrische Netz 9) weiterhin ein Verstellen der Rotorblätter 21 zu ermöglichen. Der Notkreis 5 umfasst einen Akkumulator 50 als elektrischen Energiespeicher, eine Schalteinrichtung 51 mit verbindungsleitungen 52 zu dem Stellmotor 55, die über ein Notmotorschütz 54 geschaltet sind. Der Notkreis 5 funktioniert im Notbetrieb in der Weise, dass von dem Akkumulator 50 elektrische Energie über die Schalteinrichtung 51 in die Verbindungsleitung 52 und über das Notmotorschütz 54 in den Stellmotor 45 fließt, welcher das ihm zugeordnete Rotorblatt 21 in die sichere Fahnenstellung verstellt. Diese Betriebsart wird als "ungeregelte Akkufahrt" bezeichnet. Der Gegenstand der vorliegenden Erfindung betrifft diese Betriebsart. Bei der Verstellung der Rotorblätter 21 kann es unter bestimmten Bedingungen, insbesondere auf Grund von aerodynamischen Kräften, dazu kommen, dass die Rotorblätter 21 den Stellmotor 45 antreiben. Es entsteht ein Schiebezustand. Der Stellmotor 45 erzeugt dann elektrische Energie, die herkömmlicherweise über die Verbindungsleitung 52 in den Akkumulator 50 geleitet würde. Damit bestünde die Gefahr einer Hochstromladung für den Akkumulator 50.

Gemäß der Erfindung ist eine Schutzeinrichtung 6 vorgesehen. Sie umfasst als Hauptkomponenten ein Leistungsflussdetektormodul 60 sowie ein Entlademodul 69.

Das Leistungsflussdetektormodul 60 umfasst eine Sensoreinheit 61 und eine Auswerteeinheit 62. Die Sensoreinheit 61 weist vorzugsweise eine Messeinrichtung für die Spannung im Notkreis 4 auf. Bei den üblicherweise im Notkreis 5 herrschenden Spannungen ausgehend von einer Nennspannung des Akkumulators 50 von 288 Volt kann die Spannung mittels herkömmlicher, an sich bekannter Messeinrichtung galvanisch gemessen werden. Es kann aber auch eine berührungslose Messung vorgesehen sein. Ferner kann alternativ oder zusätzlich eine Strommessung vorgenommen werden. Hierzu kann ein an sich bekanntes Strommessinstrument verwendet werden, beispielsweise eine mittels einer Stromzange oder eines Hallgebers arbeitende Ausführung. Vorzugsweise wird der Strom vorzeichenbehaftet gemessen. Die Messergebnisse der Sensoreinheit 61 sind an die Auswerteeinheit 62 angelegt. Diese ist dazu ausgebildet, basierend aus den Messwerten für die Spannung und/oder den Strom auf Grundlage der bekannten Nennspannung des Akkumulators 50 eine Bestimmung der Richtung vorzunehmen, in welcher elektrische Leistung im Notkreis 5 fließt. Im Regelfall wird es so sein, dass im Fall des Verstellens der Rotorblätter über den Notkreis 5 elektrische Leistung in den Stellmotor 45 fließt. Bei einer vorzeichenrichtigen Verknüpfung der durch die Sensoreinheit 61 gelieferten Messwerte für die Spannung und den Strom ergibt sich ein positiver Wert für die Leistung, mithin also vereinbarungsgemäß eine zu dem Stellmotor 45 weisende Flussrichtung. Ist eine Strommessung mittels der Sensoreinheit 61 nicht vorgesehen, so kann über die gemessene Spannung ein Maß für den Spannungsabfall längs des Notkreises 5 bezogen auf die Spannung am Akkumulator 50 ermittelt werden. Auf diese Weise kann durch eine reine Spannungsmessung mit niedrigerem messtechnischem Aufwand eine Bestimmung des Leistungsflusses durchgeführt werden. Liegt die von der Sensoreinheit 61 gemessene Spannung unter der Klemmspannung am Akkumulator 50, so fließt die Leistung zu dem Stellmotor 45; liegt sie höher, so fließt sie von dem elektrischen Stellmotor 45, das heißt dieser wirkt generatorisch.

Die Entladeeinrichtung 6 umfasst eine Steuereinrichtung 63 sowie einen Bremschopper 66 und einen Bremswiderstand 67. Der Bremschopper 66 ist mit den Verbindungsleitungen 52 zu dem elektrischen Stellmotor 45 verbunden. An die Steuereinrichtung 63 ist als Eingangssignal angelegt das von der Steuereinheit 62 des Leistungsflussmoduls ermittelte Signal über die Richtung des Leistungsflusses, und ferner ist gegebenenfalls ein (nicht dargestellter) Signaleingang für Kontrollsignale von einer übergeordneten Betriebssteuerung 18 vorgesehen. An einem Ausgang der Steuereinrichtung 63 ist der Bremschopper 66 angeschlossen.

Diese in Fig. 2 dargestellte Ausführungsform arbeitet wie folgt: In einem Normalbetrieb sind die Schütze 49und 44 geschlossen und die Schütze 51, 54 geöffnet. Die Verstellung der Rotorblätter 12 erfolgt nun alleine über den Pitchkreis 4 mit dem Stellmotor 45. In dem Notbetrieb sind die Schütze 51 und 54 geschlossen und die Schütze 49und 44 geöffnet. Dann wird der Stellmotor 45 aus dem Akkumulator 50 mit elektrischer Energie versorgt. Der Stellmotor 45 verstellt den Anstellwinkel Θ des ihm zugeordneten Rotorblatts 21. Um eine unerwünschte Interaktion mit dem regulären Pitchkreis 4 zu vermeiden, ist besagtes Schütz 44 des Pitchkreises 4 geöffnet. Zweckmäßigerweise ist ebenfalls das Schütz 64 geöffnet, um den Umrichter 48 des Pitchkreises 4 vom Netz 9 zu trennen. Das Leistungsflussdetektormodul 60 bestimmt im Notbetrieb, in welcher Richtung die elektrische Leistung über die Verbindungsleitungen 52 des Notkreises 5 fließt. Fließt sie von dem elektrischen Stellmotor 45, so bedeutet dies, dass der Stellmotor 45 generatorisch wirkt. Die Steuereinheit 62 des Leistungsdetektormoduls 60 gibt in diesem Fall ein Kontrollsignal an die Steuereinrichtung 63 des Entlademoduls 69. Die Steuereinrichtung 63 aktiviert den Bremschopper 66, wodurch die Verbindungsleitungen über den Bremswiderstand 67 nahezu kurzgeschlossen werden. Dadurch wird die von dem generatorisch wirkenden Stellmotor 45 in die Verbindungsleitungen 52 eingespeiste elektrische Energie in thermische Energie dissipiert. Dadurch wird der Akkumulator 50 vor einer unerwünschten Hochstromladung durch die von dem generatorisch wirkenden Stellmotor 45 erzeugte elektrische Leistung geschützt. Weiterhin wird ein unerwünschter Spannungsanstieg in dem Notkreis 5 begrenzt. Die Steuereinrichtung 63 ist zweckmäßigerweise so eingerichtet, dass sie die Spannung auf einen Wert von höchstens etwa 10 % über der Nennspannung des Akkumulators 50 begrenzt.

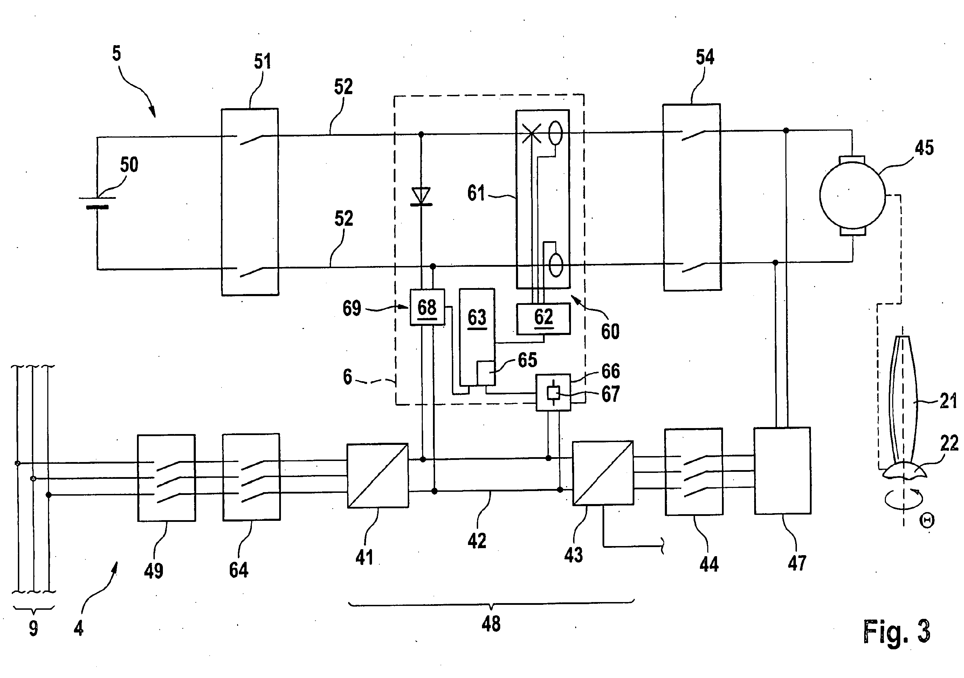

In Fig. 3 ist eine zweite Ausführungsform dargestellt, bei der der Bremschopper 66 an dem Zwischenkreis 42 des Umrichters 48 des Pitchkreises 4 angeschlossen ist. Die Steuereinrichtung 63 des Entlademoduls 69 weist außerdem ein Sollwertänderungsmodul 65 auf. Es ist dazu ausgebildet, die Sollspannung des Zwischenkreises 42 ausgehend von einem höheren Spannungsniveau im Normalbetrieb von etwa 800 Volt abzusenken auf ein niedrigeres Spannungsniveau im Notbetrieb, was in der Regel etwa 5 bis 20 % über der Nennspannung des Akkumulators 50 liegt, vorzugsweise etwa 10 %. Im dargestellten Ausführungsbeispiel ist dies bei einer Nennspannung des Akkumulators 50 von 288 Volt eine erniedrigte Sollspannung von etwa 320 Volt.

Weiter umfasst das Entlademodul 6 bei dieser Ausführungsform ein Schaltelement 68. Es ist als ein bipolares Schütz aufgebaut, welches die beiden Verbindungsleitungen 52 des Notkreises 5 mit den entsprechenden Leitungen des Gleichspannungszwischenkreises 42 des Pitchkreises 4 verbindet. Das Schaltelement 68 weist einen Schalteingang auf, der von der Steuereinrichtung 63 betätigt ist. Weiter ist als zusätzliche Sicherheit dafür, dass in dem Notbetrieb keine Verbindung des Umrichters 48 zum Netz 9 mehr besteht, eine als zusätzliches Schütz ausgeführte Netztrenneinrichtung 64 vorgesehen. Sie dient dazu sicherzustellen, dass im Notbetrieb elektrische Leistung nur über die Entladeeinrichtung 6 in den Zwischenkreis 42 fließt.

Die Erfindung arbeitet wie folgt: Der Normalbetrieb erfolgt wie bei der Ausführungsform gemäß Fig. 2. In dem Notbetrieb sind die Schütze 51 und 54 geschlossen und die Schütze 49, 64 und 44 geöffnet. Damit wird der Stellmotor 45 aus dem Akkumulator 50 mit elektrischer Energie versorgt. Der Stellmotor 45 verstellt den Anstellwinkel Θ des ihm zugeordneten Rotorblatts 21. Um eine unerwünschte Interaktion mit dem regulären Pitchkreis 4 zu vermeiden, ist das Schütz 44 des Pitchkreises 4 geöffnet. Das Schütz 64 ist geöffnet, um den Umrichter 48 des Pitchantriebs 4 vom Netz 9 zu trennen. Bei dieser Betriebsart ist das Schaltelement 68 durchgeschaltet. Das bedeutet, dass die Verbindungsleitungen 52 des Notkreises 5 mit dem Gleichspannungszwischenkreis 42 verbunden sind. Die Schaltschwelle des Bremschoppers 66 ist von der Steuereinrichtung 63 von ihrem Normalwert von ca. 800 Volt auf einen Wert von 320 Volt, also ca. 10 % über der Nennspannung des Akkumulators 50 von 288 Volt gesetzt. Tritt nun auf Grund von aerodynamischen Kräften ein Schiebezustand am Rotorblatt 21 in der Weise auf, dass der Stellmotor 45 elektrische Energie erzeugt und sie über das Schütz 54 in den Notkreis 5 einspeist, so wird diese Energie über die Entladeeinrichtung 6 in den Gleichspannungswischenkreis 42 geführt. Die Spannung im Gleichspannungszwischenkreis 42 steigt dadurch soweit an, bis sie den Wert der Schaltschwelle des Bremschoppers 66 erreicht. Diese ist durch das Sollwertänderungsmodul 65 der Steuereinrichtung 63 auf einen Wert von ca. 10 % über der Nennspannung des Akkumulators 50 abgesenkt. Ein weiteres Ansteigen der Spannung im Zwischenkreis 42 wird von dem Bremschopper 66 begrenzt, indem elektrische Energie aus dem Gleichspannungszwischenkreis 42 entnommen und durch den Bremswiderstand 67 in thermische Energie umgewandelt wird. Dank der Ableitung der von dem Stellmotor 45 im Schiebezustand erzeugten elektrischen Energie in den Gleichstromzwischenkreis 42 mit nachfolgender Vernichtung durch den Bremschopper 66 wird der Akkumulator 50 vor einer Hochstromladung geschützt.

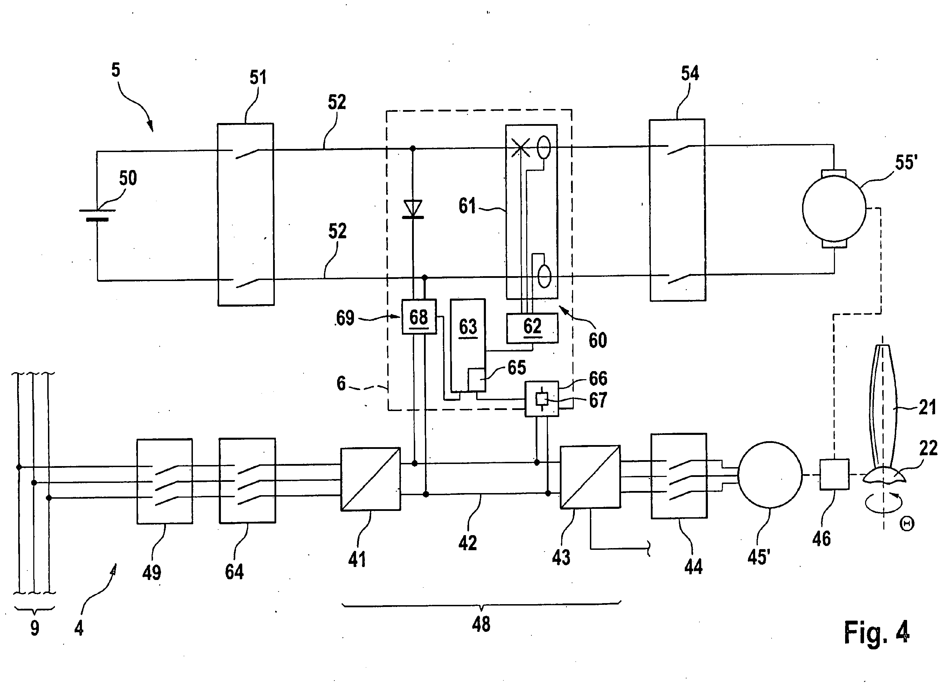

Die in Fig. 4 dargestellte alternative Ausführungsform unterscheidet sich von der in Fig. 3 dargestellten und vorstehend erläuterten im Wesentlichen dadurch, dass der Pitchkreis 4 und der Notkreis 5 jeweils einen eigenen Motor 45', 55' anstelle,des gemeinsamen Stellmotors aufweisen. Im Übrigen tragen übereinstimmende Elemente dieselben Referenznummern wie bei der Ausführungsform gemäß Fig. 2. Der Motor 45' des Pitchkreises 4 ist als ein Drehstromsynchronmotor ausgeführt und wird in an sich bekannter Weise von dem Umrichter 48 angesteuert. Der Motor 55' des Notkreises 5 ist wie auch in der Ausführungsform gemäß Fig. 2 ein Gleichstrommotor, um eine einfache Speisung aus dem Akkumulator 50 zu ermöglichen. Die Motoren 45', 55' wirken jeweils auf das Rotorblatt 21 (symbolisiert durch die gestrichelte Linie in Fig. 3). Der Motor 45' des Pitchkreises 4 wirkt aber nicht unmittelbar auf das Rotorblatt 21, sondern über eine Magnetkupplung 46. Sie ist dazu ausgebildet, im Fall des Notbetriebs mittels des Notkreises 5 zu öffnen, und so den Kraftfluss zwischen Motor 45' und dem Rotorblatt 21 zu unterbrechen.

## Patentansprüche

1. Windenergieanlage mit einem Rotor (2) mit Rotorblättern (21), deren Anstellwinkel mittels einer Pitchverstelleinrichtung änderbar ist, wobei zum Verstellen ein an einem Pitchkreis (4) und einem Notkreis (5) angeschlossener Stellmotor (45) vorgesehen ist, wobei in einem Normalbetrieb die Rotorblätter (21) mittels des Pitchkreises (4) und in einem Notbetrieb mittels des Notkreises (5) betätigt sind, und der Notkreis (5) einen elektrischen Energiespeicher (50), eine Schalteinrichtung (51) Verbindungsleitungen (52) zu dem Stellmotor (45) und eine Schutzeinrichtung aufweist,
**dadurch gekennzeichnet, dass**
die Schutzeinrichtung (6) ein Leistungsflussdetektormodul (60), das dazu ausgebildet ist zu bestimmen, ob elektrische Leistung in den oder von dem Stellmotor (45) fließt, und weiter ein Entlademodul (69) umfasst, das dazu ausgebildet ist, bei einem Leistungsfluss von dem Stellmotor (45) Spannung und/oder Strom in dem Notkreis (5) zu begrenzen.

2. Windenergieanlage nach Anspruch 1,
**dadurch gekennzeichnet, dass**
das Leistungsflussdetektormodul (60) so eingerichtet ist, die Spannung im Notkreis (5) zu bestimmen, und das Entlademodul (69) so eingerichtet ist, um bei Leistungsfluss von dem Stellmotor (45) die Spannung zu begrenzen.

3. Windenergieanlage nach Anspruch 2,
**dadurch gekennzeichnet, dass**
das Entlademodul ein Sollwertänderungsmodul (65) aufweist, dass im Notbetrieb die Spannung im Notkreis (5) auf einen Wert etwas oberhalb der Nennspannung des elektrischen Energiespeichers (50), und zwar vorzugsweise etwa 5 bis 20 %, eingestellt ist.

4. Windenergieanlage nach Anspruch 1,
**dadurch gekennzeichnet, dass**
das Leistungsflussdetektormodul (60) so eingerichtet ist, um den Strom im Notkreis (5) zu bestimmen, und das Entlademodul (69) dazu eingerichtet ist, bei einem Leistungsfluss von dem Stellmotor (45) den Strom umzuleiten.

5. Windenergieanlage nach einem der Ansprüche 1 bis 4,
**dadurch gekennzeichnet, dass**
das Entlademodul (69) mindestens einen Bremschopper (66) mit mindestens einem Bremswiderstand (67) aufweist.

6. Windenergieanlage nach Anspruch 5,
**dadurch gekennzeichnet, dass**
der Bremschopper (66) ein Bremschopper (66) des Umrichters (48) ist und im Notbetrieb über ein Schaltelement (68) mit dem Notkreis (5) verbunden ist.

7. Windenergieanlage nach Anspruch 6,
**dadurch gekennzeichnet, dass**
der Bremschopper (66) an einem Zwischenkreis (42) des Umrichters (48) angeschlossen ist.

8. Windenergieanlage nach Anspruch 6,
**dadurch gekennzeichnet, dass**
der Bremschopper (66) an einem Wechselrichter (43) oder einer H-Brückenschaltung (47) des Umrichters (48) angeschlossen ist.

9. Windenergieanlage nach einem der vorangehenden Ansprüche,
**dadurch gekennzeichnet, dass**
das Entlademodul (6) weiter mit einer Netztrenneinrichtung (64) versehen ist, die den Umrichter (48) von seinem Versorgungsnetz (9) trennt.

10. Windenergieanlage nach einem der vorangehenden Ansprüche,
**dadurch gekennzeichnet, dass**
der Stellmotor redundant ausgeführt ist mit einem Motor (45') des Pitchkreises (4) und einem Motor (55') des Notkreises (5).

11. Windenergieanlage nach Anspruch 10,
**dadurch gekennzeichnet, dass**
der Motor (45') des Pitchkreises (4) ein Drehstrommotor und der Motor (55') des Notkreises (5) ein Gleichstrommotor ist.

12. Windenergieanlage nach Anspruch 10 oder 11,
**dadurch gekennzeichnet, dass**
zumindest der Motor (45') des Pitchkreises über eine trennbare Kupplung (46) und/oder eine Scherverbindung mit dem Rotorblatt verbunden ist.

13. Verfahren zum Verstellen der Rotorblätter (21) eines Rotors (2) für Windenergieanlagen mittels eines Stellmotors (45) einer Pitchverstelleinrichtung, wobei im Normalbetrieb das Verstellen über einen Pitchkreis (4) und in einem Notbetrieb über einen Notkreis (5) erfolgt,
**gekennzeichnet durch**
Bestimmen des Leistungsflusses im Notkreis (5) und Begrenzen einer von dem Stellmotor (45) im Notbetrieb fließenden elektrischen Leistung **durch** Begrenzen der Spannung und/oder des Stroms in dem Notkreis (5).

14. Verfahren nach Anspruch 13,
**gekennzeichnet durch**
Verwenden einer Windenergieanlage nach einem der Ansprüche 1 bis 12.

## Claims

1. A wind turbine having a rotor (2) with rotor blades (21), the pitch of which may be modified by means of a pitch adjusting device, a servomotor (45) connected to a pitch circuit (4) and an emergency circuit (5) being provided for adjustment purposes, the rotor blades (21) being actuated in normal operation by means of the pitch circuit (4) and in emergency operation by means of the emergency circuit (5), and the emergency circuit (5) comprising an electrical energy storage device (50), a switch means (51), connecting lines (52) to the servomotor (45) and a safety device, **characterised in that**
the safety device (6) comprises a power flow detector module (60), which is designed to determine whether electrical power is flowing into or from the servomotor (45), and further comprises a discharge module (69), which is designed to limit voltage and/or current in the emergency circuit (5) in the event of power flow from the servomotor (45).

2. A wind turbine according to claim 1, **characterised in that** the power flow detector module (60) is configured to determine the voltage in the emergency circuit (5) and the discharge module (69) is configured to limit the voltage in the event of power flow from the servomotor (45).

3. A wind turbine according to claim 2, **characterised in that** the discharge module comprises a setpoint modification module (65), and **in that** in emergency operation the voltage in the emergency circuit (5) is adjusted to a value somewhat, specifically preferably around 5 to 20 %, above the nominal voltage of the electrical energy storage device (50).

4. A wind turbine according to claim 1, **characterised in that** the power flow detector module (60) is configured to determine the current in the emergency circuit (5), and the discharge module (69) is configured to divert the current in the event of power flow from the servomotor (45).

5. A wind turbine according to any one of claims 1 to 4, **characterised in that** the discharge module (69) comprises at least one braking chopper (66) with at least one braking resistor (67).

6. A wind turbine according to claim 5, **characterised in that** the braking chopper (66) is a braking chopper (66) of the converter (48) and is connected in emergency operation to the emergency circuit (5) via a switching element (68).

7. A wind turbine according to claim 6, **characterised in that** the braking chopper (66) is connected to an intermediate circuit (42) of the converter (48).

8. A wind turbine according to claim 6, **characterised in that** the braking chopper (66) is connected to an inverter (43) or an H-bridge circuit (47) of the converter (48).

9. A wind turbine according to any one of the preceding claims, **characterised in that** the discharge module (6) is further provided with a disconnector unit (64), which disconnects the converter (48) from its supply network (9).

10. A wind turbine according to any one of the preceding claims, **characterised in that** the servomotor is of redundant construction, with a motor (45') for the pitch circuit (4) and a motor (55') for the emergency circuit (5).

11. A wind turbine according to claim 10, **characterised in that** the motor (45') of the pitch circuit (4) is a three-phase motor and the motor (55') of the emergency circuit (5) is a direct current motor.

12. A wind turbine according to claim 10 or claim 11, **characterised in that** at least the motor (45') of the pitch circuit is connected to the rotor blade via a disconnectable coupling (46) and/or a shear connection.

13. A method for adjusting the rotor blades (21) of a rotor (2) for wind turbines by means of a servomotor (45) of a pitch adjusting device, adjustment proceeding in normal operation via a pitch circuit (4) and in emergency operation via an emergency circuit (5), **characterised by** determining the power flow in the emergency circuit (5) and limiting an electrical power flowing from the servomotor (45) in emergency operation by limiting the voltage and/or current in the emergency circuit (5).

14. A method according to claim 13, **characterised by** using a wind turbine according to any one of claims 1 to 12.

## Revendications

1. Eolienne comprenant un rotor (2) muni de pales de rotor (21), dont l'angle d'attaque est modifiable à l'aide d'un dispositif de réglage du pas, un moteur de commande (45) raccordé à un circuit de pas (4) et à un circuit d'urgence (5) étant prévu pour le réglage, les pales de rotor (21) étant actionnées en fonctionnement normal à l'aide du circuit de pas (4) et en fonctionnement d'urgence à l'aide du circuit d'urgence (5), et le circuit d'urgence (5) présentant un accumulateur d'énergie électrique (50), un dispositif de commutation (51), des lignes de raccordement (52) au moteur de commande (45) et un dispositif de protection,
**caractérisée en ce que**
le dispositif de protection (6) comporte un module de détection du flux de puissance (60) réalisé afin de déterminer si la puissance électrique circule dans le ou du moteur de commande (45), et en outre un module de décharge (69) réalisé afin de limiter pour un flux de puissance du moteur de commande (45), une tension et/ou du courant dans le circuit d'urgence (5).

2. Eolienne selon la revendication 1,
**caractérisée en ce que**
le module de détection de flux de puissance (60) est aménagé de façon à déterminer la tension dans le circuit d'urgence (5), et le module de décharge (69) est aménagé de façon à limiter la tension en cas de flux de puissance du moteur de commande (45).

3. Eolienne selon la revendication 2,
**caractérisée en ce que**
le module de décharge présente un module de changement de consigne (65), **en ce qu'**en fonctionnement d'urgence, la tension dans le circuit d'urgence (5) est réglée sur une valeur à peu près au-dessus de la tension nominale de l'accumulateur d'énergie électrique (50), et ce de préférence entre environ 5 et 20 %.

4. Eolienne selon la revendication 1,
**caractérisée en ce que**
le module de détection de flux de puissance (60) est aménagé afin de déterminer le courant dans le circuit d'urgence (5), et le module de décharge (69) est aménagé afin de détourner le courant en cas de flux de puissance du moteur de commande (45).

5. Eolienne selon l'une quelconque des revendications 1 à 4,
**caractérisée en ce que**
le module de décharge (69) présente au moins un chopper de freinage (66) avec au moins une résistance de freinage (67).

6. Eolienne selon la revendication 5,
**caractérisée en ce que**
le chopper de freinage (66) est un chopper de freinage (66) du convertisseur (48) et est relié en fonctionnement d'urgence par un élément de commutation (68) au circuit d' urgence (5).

7. Eolienne selon la revendication 6,
**caractérisée en ce que**
le chopper de freinage (66) est raccordé à un circuit intermédiaire (42) du convertisseur (48).

8. Eolienne selon la revendication 6,
**caractérisée en ce que**
le chopper de freinage (66) est raccordé à un onduleur (43) ou à un circuit en pont H (47) du convertisseur (48).

9. Eolienne selon l'une quelconque des revendications précédentes,
**caractérisée en ce que**
le module de décharge (6) est en outre pourvu d'un dispositif de coupure de tension réseau qui sépare le convertisseur (48) de son réseau d'alimentation (9).

10. Eolienne selon l'une quelconque des revendications précédentes,
**caractérisée en ce que**
le moteur de commande est réalisé de manière redondante avec un moteur (45') du circuit de pas (4) et un moteur (55') du circuit d'urgence (5).

11. Eolienne selon la revendication 10,
**caractérisée en ce que**
le moteur (45') du circuit de pas (4) est un moteur triphasé et le moteur (55') du circuit d'urgence (5) est un moteur à courant continu.

12. Eolienne selon la revendication 10 ou 11,
**caractérisée en ce que**
au moins le moteur (45') du circuit de pas est relié à la pale de rotor par un couplage (46) séparable et/ou une liaison par cisaillement.

13. Procédé de réglage des pales (21) d'un rotor (2) pour des éoliennes à l'aide d'un moteur de commande (45) d'un dispositif de réglage du pas, dans lequel le réglage est effectué en fonctionnement normal, par un circuit de pas (4) et en fonctionnement d'urgence, par un circuit d'urgence (5),
**caractérisé par**
la détermination du flux de puissance dans le circuit d'urgence (5) et la limitation d'une puissance électrique circulant du moteur de commande (45) en fonctionnement d'urgence par la limitation de la tension et/ou du courant dans le circuit d'urgence (5).

14. Procédé selon la revendication 13,
**caractérisé par**
l'utilisation d'une éolienne selon l'une quelconque des revendications 1 à 12.
